# EUROPEAN PATENT SPECIFICATION

(11) **EP 2 468 532 B1**
(45) Date of publication and mention of the grant of the patent: **09.05.2018**
(21) Application number: 10810044.7
(22) Date of filing: 20.08.2010
(51) Int. Cl.: B60C 5/01, B29D 30/08, B60C 5/22, B60C 11/00, B60C 15/02

(54) **TIRE AND TIRE MANUFACTURING METHOD**
REIFEN UND VERFAHREN ZUR HERSTELLUNG EINES REIFENS
PNEUMATIQUE ET PROCEDE DE FABRICATION DE PNEUMATIQUE

(30) Priority: 20.08.2009 JP 2009191198
(43) Date of publication of application: 27.06.2012
(73) Proprietor: Bridgestone Corporation, Tokyo 104-8340 (JP)
(72) Inventor: KOUNO, Yoshihide, Tokyo 104-8340 (JP); KON, Seiji, Tokyo 104-8340 (JP)
(74) Representative: Oxley, Robin John George
(86) International application number: PCT/JP2010/064116
(87) International publication number: WO 2011/021703

(56) References cited:
- EP-A1- 2 399 760
- WO-A1-2010/095655
- GB-A- 1 262 422
- JP-A- 3 148 302
- JP-A- 49 125 481
- JP-A- 51 136 762
- JP-A- 55 011 894
- JP-A- 59 011 901
- JP-A- 59 034 904
- JP-A- 2005 343 380
- US-A- 3 472 715
- US-A- 3 607 570
- US-A- 3 888 291
- US-A- 4 969 999
- US-A1- 2002 066 513

## Description

### Technical Field

The present invention relates to a tire for rim mounting and a tire manufacturing method, and in particular to a tire with at least a portion formed from a thermoplastic material and a tire manufacturing method of the same.

### Background Art

Pneumatic tires configured with rubber, organic fiber material, and steel members are traditionally employed on vehicles such as cars.
However there is a limit to post-use rubber recycling applications, and disposal is performed by such methods as combustion to give thermal recycling and by shredding for use as a road pavement material.

There is demand recently to use materials such as thermoplastic resins and thermoplastic elastomers as tire materials due to their advantages from the perspectives of weight reduction and ease of recycling.
For example, a pneumatic tire formed using a thermoplastic polymer material is described in Patent Document 1: Japanese Patent Application Laid-Open No. 03-143701. Reference is also made to the following:
US3888291, which discloses a tire and a tire manufacturing method according to the preamble of Claim 1 and Claim 9, respectively;
JP 59-011901;
JP 59-034904;
US 3472715;
EP-A-2399760;
JP 2005-343380;
US 2002/066513;
GB 1262422;
US3607570; and
US4969999.

### DISCLOSURE OF INVENTION

### Technical Problem

A tire employing a thermoplastic polymer material is easier and cheaper to manufacture than a conventional rubber tire.
However an issue arises in that when molding the tire with a mold, if the tire hollow portion is formed by a core then the core cannot be removed after molding the tire. Accordingly in Patent Document 1 the tire is divided on the axial direction, half-ring shaped tire sections are molded, and the two tire sections are then joined together to obtain a pneumatic tire. Joining the tire sections is achieved by heating by the mold itself or heating with a radio frequency heater at the periphery of the joint portion of one of the tire sections to the other tire section, melting and causing the thermoplastic polymer material forming the tire sections to flow.

However, when a tire section that has already been molded is reheated and melted, the joint portion is heated for a long duration, and sometimes the material strength of the melted then solidified portion is reduced compared to the other portions due to thermal degradation, with concerns regarding the strength of the joint portion still being an issue.
It is also difficult before joining in a mold to superimpose the edge portions of the tire sections on each other around a single turn to give an overlap with good precision.
Also, the joint portion needs to be molded in a joining mold since the periphery to the joint portion is melted, with the undesirable issue of an increased number of molds.
Furthermore, if an asymmetrical profile is adopted for a half-ring shaped tire section joint portion in order to suppress undulations at the joint portion this has the undesirable effect of increasing the number of types of mold (two types of mold are required).

The present invention is directed to addressing the above issues in particular to provide a tire and a tire manufacturing method that ensure sufficient strength of a joint portion. Solution to Problem

The present invention provides a tire as set out in Claim 1.

Explanation follows regarding the operation of the tire of the present invention. When contemplating making a rim mounted tire as a molded product made from a thermoplastic material it is difficult to remove the core used for forming the internal face section of the tire from inside the tire after the tire has been formed in the mold. However, if the tire is for example divided into plural parts in say the axial direction, it becomes possible to mold the separated tire structuring members without the use of a core for each part.

Therefore according to a tire of the invention, first tire structuring members are joined together by joining with a second thermoplastic material. Due to not melting and directly joining the tire structuring members formed from a thermoplastic material as in a tire employing conventional technology, a reduction in strength due to thermal degradation of the first thermoplastic material is suppressed, and the strength of the joint portion can be ensured. Due to the presence of the second thermoplastic material the joining accuracy is also increased. Due to the first thermoplastic material and the second thermoplastic material both being thermoplastic resins, the joint strength is high compared to cases in which different materials, such as a thermoplastic resin and a metal, are joined together. Moreover, it is possible to raise the joint strength further if the first thermoplastic material and the second thermoplastic material intermix at the joint portion of the first thermoplastic material and the second thermoplastic material, in comparison with cases in which the first thermoplastic material and the second thermoplastic material do not intermix.

The side of the tire that contacts the road surface is reinforced by providing the reinforcement layer formed by spirally winding a cord of higher rigidity than the first thermoplastic material at the outer peripheral section of the tire. Note that the role of the reinforcement layer corresponds to that of a belt in a rubber pneumatic tire.The resistance to punctures, burst resistance, circumferential direction rigidity and creep preventing effect are accordingly increased by providing the reinforcement layer to the outer peripheral section of the tire, in comparison to cases in which a reinforcement layer is not provided.

According to the invention, it is possible to raise the joint strength by angling the joint faces towards the tire radius decreasing direction on progression towards edge portions of the tire structuring members, as the surface area to which the second thermoplastic material is applied (the joint surface area) is increased compared to cases in which the facing surfaces are simply abutted against each other and joined.

A groove of substantially triangular cross-section is also formed between the two angled faces due to angling the joint faces towards the tire radius decreasing direction on progression towards edge portions of the tire structuring members. By then letting the molten second thermoplastic material flow into the groove such that the second thermoplastic material is applied to both the sloping joint faces, unevenness of the tire outer peripheral side of the joint portion can be suppressed while still performing reliable joining. Accordingly, a uniform thickness of the outer peripheral section can be achieved, increasing tire capabilities such as uniformity, and also facilitating inflow of the second thermoplastic material.

By applying the second thermoplastic material to the inside and outside faces of the first adjacent tire structuring member and the inside and outside faces of the second adjacent tire structuring member at the joint portion of the tire structuring members, the application surface area of the second thermoplastic material (joint surface area) is increased, enabling the joint strength to be further increased. A strong join is also achieved in the bend direction.

Preferably, the tire includes a bead section for making contact with a bead seat of a rim provided at the tire radial direction inside and a rim flange, wherein a bead core is embedded in a ring shape in the bead section.

It is possible to retain the tire strongly to the rim by embedding the bead core in a ring shape in the bead section that is the location fitting to the rim, similarly to conventional rubber pneumatic tires.

Preferably, the tire is formed from the first thermoplastic material at least from the bead section to an outer peripheral section.

By forming the tire from the first thermoplastic material from the bead section to an outer peripheral section, namely by forming the tire with the first thermoplastic material from one bead section to the other bead section, the proportion of the first thermoplastic material in the tire as a whole becomes greater, increasing the recyclability of the tire.
Note that reference to the outer peripheral section indicates the section joining the tire radial direction outer edge side of a first tire side section with the tire radial direction outer edge side of the other tire side section, namely indicates the section corresponding to the tread section that makes ground contact with the road surface.

Preferably, the first adjacent tire structuring member and the second adjacent tire structuring member are placed with a gap between each other, and the second thermoplastic material is interposed into the gap.

Placing the first adjacent tire structuring member and the second adjacent tire structuring member with a gap between each other results in an increase in surface area applied with the second thermoplastic material by the surface area of the faces that form the gap (the faces that are not in close contact), compared to cases in which the first adjacent tire structuring member and the second adjacent tire structuring member are placed in close contact with each other, and the joint strength can be increased yet further. A strong join is also achieved in the bend direction.

Preferably, the first adjacent tire structuring member and the second adjacent tire structuring member are joined together at a tire width direction central portion.

By configuring so that the first adjacent tire structuring member and the second adjacent tire structuring member are joined together at a tire width direction central portion, the two tire structuring members of similar profile are aligned facing each other and joined together. A single type of mold can be used for forming the tire structuring members, enabling more efficient manufacturing to be attained in comparison to cases in which the first adjacent tire structuring member and the second adjacent tire structuring member have different profiles.

Preferably, the plural tire structuring members include a pair of first tire structuring members for configuring tire side sections at the two sides, and a second tire structuring member disposed between the pair of first tire structuring members and configuring an outer peripheral section for facing towards a road surface.

The joint locations can be configured so that they are not abraded through contact with the road surface by forming the tire with a pair of first tire structuring members configuring side sections and a second tire structuring member configuring an outer peripheral section for facing towards the road surface. Faults originating in the joint portion can be restricted since direct input to the joint portion from the road surface is suppressed.

Preferably, a seal section formed from a rubber with superior sealing properties to the first thermoplastic material is provided to a portion of the tire making contact with a rim so that air inside the tire does not leak out.

The sealing ability between the tire and the rim is raised by providing the seal section formed from the rubber with superior sealing properties to the first thermoplastic material to the portion of the tire making contact with the rim. It is therefore possible to further suppress air leakage from inside the tire compared to cases in which sealing is between the rim and the thermoplastic material. Also, rim-fitability is increased by providing the seal section.

Preferably, a tread rubber layer formed from a rubber with superior abrasion resistance to that of the first thermoplastic material is provided at a portion of the tire making contact with a road surface.

Properties including abrasion resistance and burst resistance are raised by providing the tread rubber layer formed from the rubber with superior abrasion resistance to that of the first thermoplastic material at the portion making contact with the road surface, compared to cases in which rubber is not provided to the portion making contact with the road surface.

The present invention further provides a tire manufacturing method as set out in Claim 9.

According to a tire manufacturing method of the present invention, firstly, for example, the first tire structuring member and the second tire structuring member are aligned facing each other and then the second thermoplastic material which has been melted is applied to both the first tire structuring member and the second tire structuring member. Then, the first tire structuring member and the second tire structuring member are firmly joined together by cooling and solidifying the second thermoplastic material that has been applied to the first tire structuring member and the second tire structuring member.
As the thermoplastic material from which the tire structuring members themselves are formed is not melted and joined as in known conventional tires, it becomes possible to efficiently manufacture a tire which ensures the strength of the joint portions while suppressing a decrease in strength due to thermal degradation of the first thermoplastic material.
The joining accuracy is also increased due to the presence of the second thermoplastic material.

Preferably, the tire manufacturing method further includes a preheating process for preheating locations to be joined on the first and second tire structuring members the second thermoplastic material that has been melted being applied to the preheated locations to be joined.

In this case, firstly the first tire structuring member and the second tire structuring member that are to be connected together are preheated at the locations to be joined in the preheating process. In the subsequent joining process, for example, the first tire structuring member and the second tire structuring member are brought face to face and the second thermoplastic material that has been melted is applied to the locations to be joined on both the first tire structuring member and the second tire structuring member. Then, the first tire structuring member and the second tire structuring member are firmly joined together by cooling and solidifying the second thermoplastic material that has been applied to the first tire structuring member and the second tire structuring member. In a comparison of cases in which the tire structuring members to which the second thermoplastic material is applied are preheated to cases in which they are not preheated, the affinity between the first thermoplastic material and the second thermoplastic material is higher when preheating has been carried out, and a high joint strength can be achieved.

Preferably, in the preheating process the locations to be joined are preheated in sequence; and in the joining process the melted second thermoplastic material is supplied in sequence to along the preheated locations to be joined, and the second thermoplastic material applied to the tire structuring members is pressed in sequence by a roller.

In this case, the melted second thermoplastic material is supplied in sequence to along the locations to be joined on the first tire structuring member and the second tire structuring member. The melted second thermoplastic material that has been applied to the tire structuring members is then pressed in sequence by a roller. It is thereby possible to smooth out flat and solidify the second thermoplastic material. It is also possible to reliably apply the second thermoplastic material in a molten state to the surface of the tire structuring member.

According to the tire manufacturing process of the present invention, because an outside angled face is formed to an outer peripheral face of the tire structuring member so as to be angled towards the tire radius decreasing direction on progression towards the tire structuring member edge portion, the surface area to which the second thermoplastic material is applied (the joint surface area) increases in comparison to cases in which the two facing surfaces are simply abutted and joined. It is thus possible to raise the joint strength.

Also, by forming an outside angled face to an outer peripheral face of the tire structuring member so as to be angled towards the tire radius decreasing direction on progression towards the tire structuring member edge portion, a groove of a substantially triangular cross section is formed by the two outside angled faces at the joining location. By pouring the melted second thermoplastic material into the groove it is possible to suppress unevenness to the tire outer peripheral side of the joint portion whilst still performing reliable joining. The thickness of the outer peripheral section can thereby be made uniform, increasing tire capabilities such as uniformity, and also facilitating pouring of the second thermoplastic material itself.

Preferably, in the joining process: a ring shaped groove is formed along the outer peripheral face of the locations to be joined; and the inner peripheral faces of the first tire structuring member and the second tire structuring member are supported by an inside support member; the second thermoplastic material that has been applied in a molten state to the outer peripheral face of the tire structuring members is pressed with a roller such that a portion of the molten state second thermoplastic material is inserted into the ring shaped groove through between the first tire structuring member and the second tire structuring member and applied to the respective inner peripheral faces of the first tire structuring member and the second tire structuring member.

In this case, the second thermoplastic material is applied in a molten state to the outer peripheral face of the tire structuring members and pressed from the outer peripheral side with the roller. The second thermoplastic material that has been applied to the outer peripheral face of the tire structuring members is thereby smoothed out flat and also a portion of the molten state second thermoplastic material enters the ring shaped groove of the inside support member through between the first tire structuring member and the second tire structuring member and is applied to the respective inner peripheral faces of the first tire structuring member and the second tire structuring member.

At the joint portion of the tire structuring members, due to the second thermoplastic material being applied to the inside and outside faces of the first tire structuring member and the inside and outside faces of the tire structuring member to be joined together, the application surface area of the second thermoplastic material (the joint surface area) is increased, and it is possible to further increase the joint strength. Good strength is also achieved with respect to force in the bending direction.

Preferably, the tire manufacturing method of the present invention further includes a forced cooling process in which at least the second thermoplastic material applied to the tire structuring members is force cooled.

By force cooling the second thermoplastic material in the forced cooling process, it is possible to rapidly solidify the molten second thermoplastic material, and lifting and deformation of the second thermoplastic material can be suppressed. Note that forced cooling means cooling more rapidly than by natural cooling by contacting with a component or air at a temperature lower than the melting point of the second thermoplastic material.

### Advantageous Effects of Invention

Due to being configured as described above, a tire of the present invention exhibits the excellent advantageous effect of being able to ensure ample strength of the joint portion of tire structuring members made of a thermoplastic material.
The joint strength can be increased, and tire performance characteristics such as uniformity can be raised.

According to a tire manufacturing method of the present invention, efficient manufacture can be achieved of a tire ensuring sufficient strength of the joint portion of tire structuring members formed of thermoplastic material.

According to a tire manufacturing method of the present invention the joint strength can be further increased, and tire performance characteristics such as uniformity can also be enhanced.

### BRIEF DESCRIPTION OF DRAWINGS

Fig. 1A is perspective view with a cross-section taken through a portion of a tire according to a first exemplary embodiment of the present invention.
Fig. 1B is a cross-section of a bead section mounted to a rim.
Fig. 2 is a perspective view of a building machine.
Fig. 3A is perspective view showing a tire supporting section at a minimum diameter.
Fig. 3B is perspective view showing a tire supporting section at a maximum diameter.
Fig. 4 is a perspective view of a building machine and an extruder.
Fig. 5 is a perspective view illustrating relevant portions of a cord feeder device.
Fig. 6 is an enlarged cross-section of a joint portion of tire halves.
Fig. 7 is a perspective view of tire halves and a tire supporting section supporting a tire inner face support ring.
Fig. 8 is a cross-section illustrating a joint portion of tire halves in which a welding thermoplastic material has been employed.
Fig. 9 is a cross-section illustrating a joint portion (not according to the invention) of tire halves in which a welding thermoplastic material has been employed.
Fig. 10 is a cross-section illustrating a joint portion of tire halves in which a welding thermoplastic material has been employed.
Fig. 11 is a cross-section illustrating a joint portion (not according to the invention) of tire halves in which a welding thermoplastic material has been employed.
Fig. 12 is a cross-section illustrating a joint portion (not according to the invention) of tire halves in which a welding thermoplastic material has been employed.
Fig. 13 is a cross-section illustrating a joint portion (not according to the invention) of tire halves in which a welding thermoplastic material has been employed.
Fig. 14 is a cross-section illustrating a joint portion (not according to the invention) of tire halves in which a welding thermoplastic material has been employed.
Fig. 15 is a cross-section illustrating a joint portion (not according to the invention) of tire halves in which a welding
   thermoplastic material has been employed.
Fig. 16 is an exploded perspective view of a tire case and a tread rubber layer according to another exemplary embodiment.
Fig. 17 is a cross-section of a tire according to another exemplary embodiment.
Fig. 18 is a cross-section of a tube.
Fig. 19 is a cross-section of a tubed type tire.
Fig. 20 is a perspective view of a building machine according to another exemplary embodiment,

### BEST MODE FOR CARRYING OUT THE INVENTION

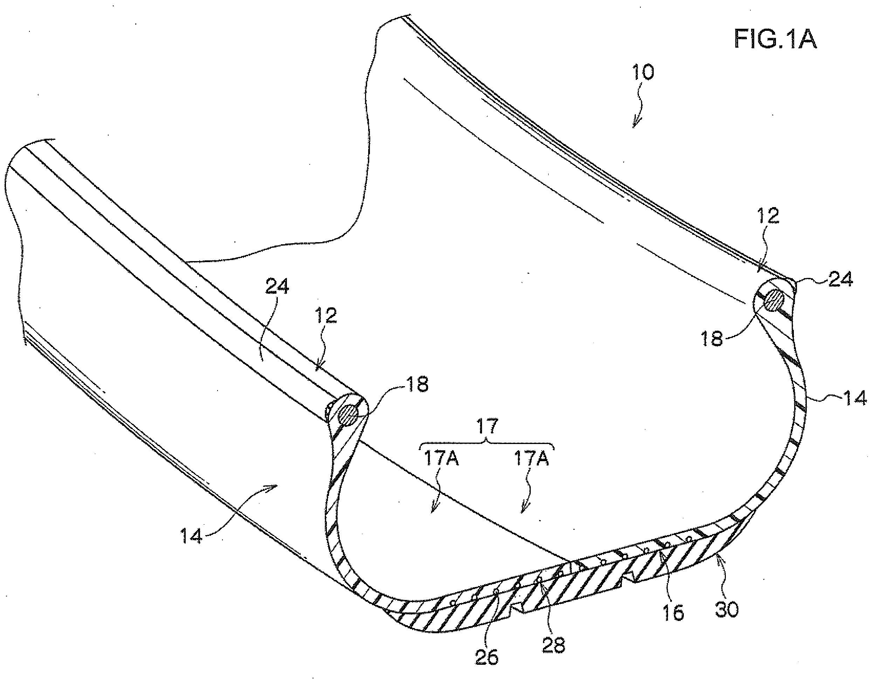

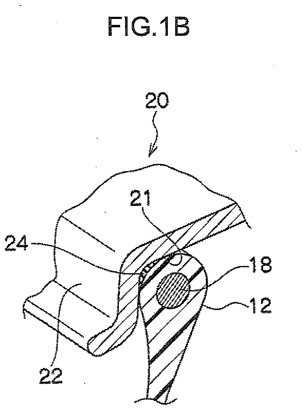

Explanation follows regarding a tire of an exemplary embodiment of a tire of the present invention, with reference to the drawings. As shown in Fig. 1, a tire 10 of the present exemplary embodiment exhibits a cross-sectional profile substantially the same as that of a conventional ordinary rubber pneumatic tire.
The tire 10 is equipped with a tire case (serving as an example of a tire frame member) 17 configured by: a pair of bead sections 12 that make contact with a bead seat 21 and a rim flange 22 of a rim 20; side sections 14 that extend from the bead sections 12 towards the tire radial direction outside; and a crown section 16 that connects together the tire radial direction outside edge of one of the side sections 14 and the tire radial direction outside edge of the other of the side sections 14.

The tire case 17 of the present exemplary embodiment is formed from a first thermoplastic material.
The tire case 17 of the present exemplary embodiment is formed by mutually aligning circular ring shaped tire halves 17A, serving as tire structuring members, each formed in similar shapes to each other by integrating together, such as by molding, one of the bead sections 12, one of the side sections 14, and a half width crown section 16, and joining together the tire halves 17A along a tire equatorial plane face portion, so as to form an air chamber between the tire case 17 and a rim. The tire case 17 is not limited to a tire case formed by bonding together two members, and the tire case 17 may be formed by bonding together 3 or more members, such as a first member of one of the bead sections 12 and one of the side sections 14 integrated together, a second member corresponding to a tread section (tire outer peripheral section) and a third member of the other of the bead sections 12 and the other of the side sections 14 integrated together. The tire case 17 may also be formed by molding the pair of bead sections 12, the pair of side sections 14 and the crown section 16 as a single unit. Reinforcement materials (such as fibers, cords, non-woven fabric or woven fabric made of a high polymer material or a metal) may be embedded in the tire case 17 (such as in the bead sections 12, the side sections 14 and/or the crown section 16) such that the tire case 17 is reinforced by the reinforcement material.

Examples of materials that can be employed as the first thermoplastic material include thermoplastic resins and thermoplastic elastomers (TPE), however a thermoplastic elastomer is preferably employed in consideration of the resilience required during running and formability during manufacture.

Examples of such thermoplastic elastomers include, for example, amide thermoplastic elastomers (TPA), ester thermoplastic elastomers (TPC), olefin thermoplastic elastomers (TPO), styrene thermoplastic elastomers (TPS), urethane thermoplastic elastomers (TPU), thermoplastic cross-linked rubber (TPV) or other thermoplastic elastomers (TPZ), as defined in JIS K6418. In particular TPV with a portion of rubber resin mixed and kneaded in is preferable.
Examples of thermoplastic resins include, for example, urethane resins, olefin resins, vinyl chloride resins and polyamide resins.

Examples of materials that can be employed as such thermoplastic materials include materials with a deflection temperature under load (during loading at 0.45MPa) of 78 °C or greater as defined by ISO75-2 or ASTM D648, tensile yield strength of 10MPa or greater as defined by JIS K7113, tensile yield elongation of 10% or greater as similarly defined by JIS K7113, tensile break point elongation (JIS K7113) of 50% or greater as similarly defined by JIS K7113, Vicat softening temperature (method A) of 130°C or greater as defined by JIS K7206.

The tire halves 17A configured from the first thermoplastic material can be formed by, for example, vacuum molding, air pressure molding, injection molding or melt casting. Accordingly, the manufacturing processes can be greatly simplified in comparison to molding (vulcanizing) in rubber and a much shorter molding time is sufficient.
In the present exemplary embodiment the tire halves 17A are left-right symmetrically shaped, namely there is the advantage that since one of the tire halves 17A is formed with the same shape as the other of the tire halves 17A a single mold is sufficient for molding the tire halves 17A.

A circular ring shaped bead core 18 formed from a steel cord is embedded in each of the bead sections 12 of the present exemplary embodiment, similarly to in an ordinary conventional pneumatic tire, however the bead core 18 may be omitted as long as sufficient rigidity of the bead sections 12 is achieved and no problems arise in fitting to the rim 20. The bead core 18 may be configured with a cord or material other than steel, such as an organic fiber cord.

In the present exemplary embodiment the contact portion of the bead sections 12 to the rim 20, at least the portion that makes contact with the rim flange 22 of the rim 20, is formed from a circular ring shaped seal layer 24 formed from a rubber having superior sealing ability to that of the first thermoplastic material. The seal layer 24 may also be formed at the portion that makes contact with the bead seat. Preferably a similar type of rubber to that employed on the bead portion outer face of an ordinary conventional rubber pneumatic tire is used for the rubber for forming the seal layer 24. The rubber seal layer 24 may be omitted as long as sealing ability can be secured to the rim 20 by the thermoplastic resin alone. Configuration may also be made employing another type of thermoplastic resin having superior sealing ability to that of the first thermoplastic resin forming the side sections 14.

A crown reinforcement layer 28 made from spirally wound steel reinforcement cord 26 is embedded in the crown section 16. Configuration may be made with the reinforcement cord 26 completely embedded in the crown section 16, or configuration may be made with only part of the reinforcement cord 26 embedded in the crown section 16. The crown reinforcement layer 28 corresponds to a belt disposed at the outer peripheral face of the carcass in a conventional rubber pneumatic tire.

The embedding amount of the reinforcement cord 26 is preferably 1/5 or more of the diameter of the reinforcement cord 26, and more preferably more than 1/2. It is most preferable for the whole of the reinforcement cord 26 to be embedded in the crown section 16. When the embedded amount of the reinforcement cord 26 exceeds 1/2 the diameter of the reinforcement cord 26 then the reinforcement cord 26 becomes less likely to come out from the surface due to dimensionality. When the whole of the reinforcement cord 26 is buried in the crown section 16 the surface becomes flat, making it less likely that air is incorporated when members are laid down above.

A tread rubber layer 30 (serving as a second tire structuring member) is disposed at the outer peripheral side of the crown reinforcement layer 28, with the tread rubber layer 30 configured from a rubber with superior abrasion resistance characteristics than the first thermoplastic material forming the side sections 14. Preferably a similar type of rubber to the rubber employed in a conventional rubber pneumatic tire is employed as the rubber used in the tread rubber layer 30. Configuration may be made with a tread layer provided at an outer peripheral section and formed from another type of thermoplastic material with superior abrasion resistance characteristics to those of the first thermoplastic material forming the side sections 14.

### Tire Manufacturing Apparatus

Explanation follows regarding a manufacturing apparatus for the tire 10 of the present exemplary embodiment.

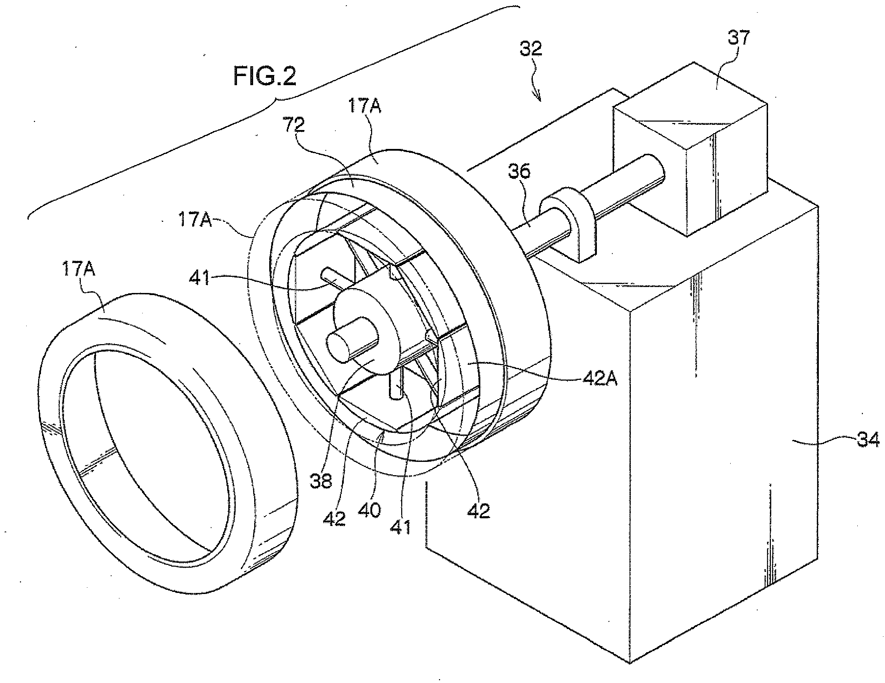

Fig. 2 is a perspective view of relevant portions of a building machine 32 employed when forming the tire 10. The building machine 32 has a geared motor 37 for rotating a horizontally disposed shaft 36 attached to the top of a seating block 34 placed on the floor.

A tire supporting section 40 is provided on the end side of the shaft 36. The tire supporting section 40 is equipped with a cylinder block 38 fixed to the shaft 36, and with plural cylinder rods 41 provided at even spacings around the circumferential direction of the cylinder block 38 and extending towards the radial direction outside.
Tire support plates 42 are provided at the leading ends of the cylinder rods 41. Each of the tire support plates 42 has a circular arc shaped face 42A on the outside face provided with a radius of curvature substantially that of the tire inner face.

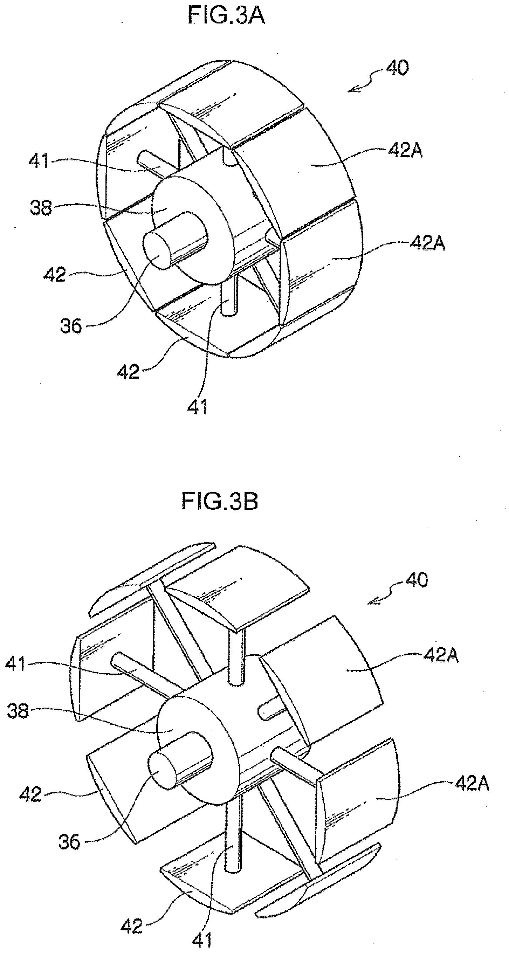

Fig. 2 and Fig. 3A illustrate the cylinder rods 41 in a state in which there is the minimum amount protruding (the minimum diameter state of the tire supporting section 40). Fig. 3B illustrates the cylinder rods 41 in a state in which there is the maximum amount protruding (the maximum diameter state of the tire supporting section 40).
The cylinder rods 41 are all coupled together enabling each to be moved by the same amount in the same direction.

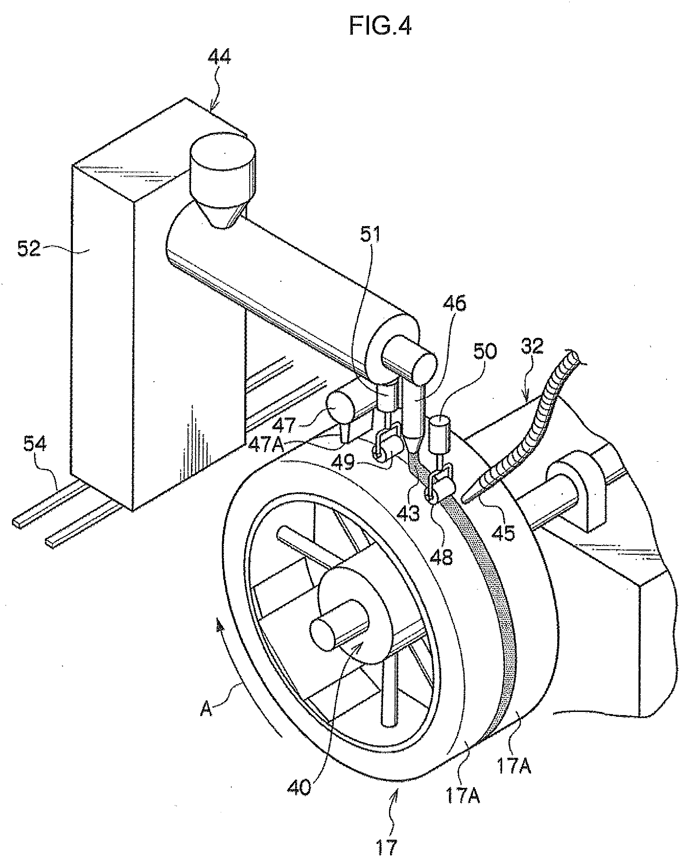

As shown in Fig. 4, an extruder 44 is disposed in the vicinity of the building machine 32 for extruding a welding thermoplastic material 43 (the second thermoplastic material of the present invention). The extruder 44 is equipped with a resin extruding nozzle 46 for ejecting the melted welding thermoplastic material 43 downwards.
The welding thermoplastic material 43 is preferably a similar type of material as the first thermoplastic material forming the tire case 17, however a different type of material may be employed as long as welding can be achieved. When a similar type of material is employed then the whole of the tire case 17 can be formed from a single type of thermoplastic material, resulting in a reduction in cost. When different types of material are employed then it is possible to employ materials with the particular characteristics favorable for, respectively, the first thermoplastic material employed for the tire frame member and for the welding thermoplastic material 43 employed for joining.

A flatting roller 48 to press against the welding thermoplastic material 43 applied to the tire outer face, and a cylinder device 50 for moving the flatting roller 48 up or down are disposed in the vicinity of the resin extruding nozzle 46, at the tire case 17 rotation direction downstream side (the arrow A direction side). The cylinder device 50 is supported through a frame, not shown in the drawings, by a support pillar 52 of the extruder 44.

The flatting roller 48 in the present exemplary embodiment is water-cooled with cooling water by circulating cooling water inside the roller. In order to water-cool the flatting roller 48 configuration may be made with a hollow construction for an inside portion of the flatting roller 48 and shaft, with tubes connected through rotating connectors at each end of the shaft. Cooling water is then supplied to inside the roller from one rotating connector side, and post-use cooling water is then discharged from the other rotating connector side.

A cooling air ejection nozzle 45 for ejecting cooling air is disposed at the tire frame member rotation direction downstream side of the flatting roller 48.

A fan 47 is disposed at the opposite direction side to the tire case rotation direction side (the opposite side direction to the arrow A direction) of the resin extruding nozzle 46. A hot air shielding roller 49 is disposed between the fan 47 and the resin extruding nozzle 46.

The fan 47 is supported through a not-illustrated frame by the support pillar 52 of the extruder 44. The fan 47 has a nozzle 47A for blowing hot air towards the portion where one of the tire halves 17A is to be joined to the other of the tire halves 17A to preheat the joint portion.
A cylinder device 51 is disposed above the hot air shielding roller 49 for moving the hot air shielding roller 49 in the up-down directions. The cylinder device 51 is supported by a not-illustrated frame from the support pillar 52 of the extruder 44.

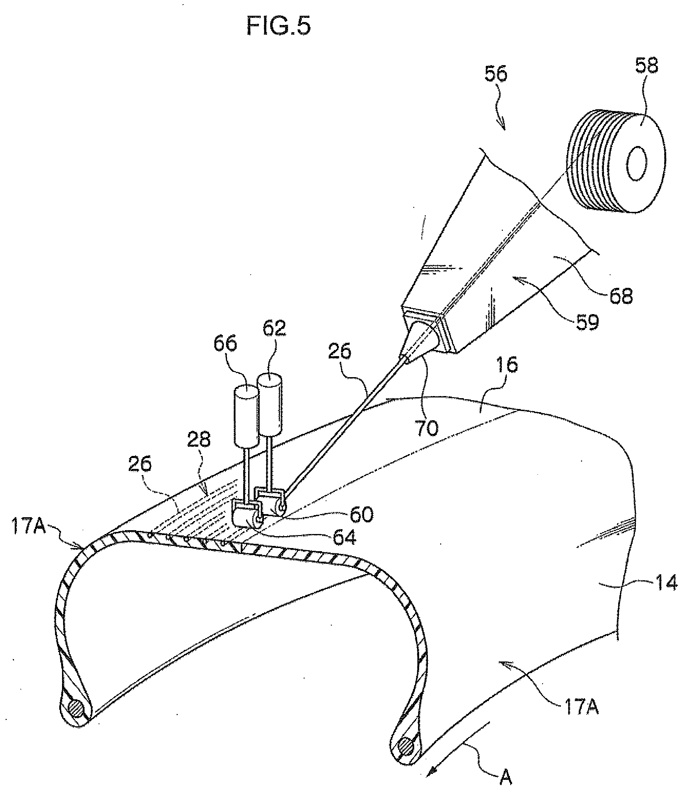

The extruder 44 is capable of moving along guide rails 54 disposed on the floor in a direction parallel to the shaft 36 of the building machine 32.
A cord feeder device 56 is movably mounted to the guide rails 54, as shown in Fig. 5. The cord feeder device 56 is equipped with a reel 58 and a cord heating device 59.

The cord feeder device 56 is equipped with: the reel 58 on which the reinforcement cord 26 is wound; the cord heating device 59 disposed at the cord conveying direction downstream side of the reel 58; a first roller 60 disposed at the reinforcement cord 26 conveying direction downstream side; a first cylinder device 62 for moving the first roller 60 in the direction so as to make contact with or move away from the tire outer peripheral face; a second roller 64 disposed at the reinforcement cord 26 downstream side of the first roller 60; and a second cylinder device 66 for moving the second roller 64 in the direction so as to make contact with or move away from the tire outer peripheral face. Note that the cord feeder device 56 may be provided with only one of the first roller 60 or the second roller 64.

The cord heating device 59 is also equipped with: a heating box 68 into which hot air is supplied from a heater and fan for generating hot air, not shown in the drawings, with the reinforcement cord 26 passing through the internal space of the heating box 68; and a discharge section 70 from which the heated reinforcement cord 26 is discharged.

Tire Case Building Process
(1) As shown in Fig. 2, first the two tire halves 17A are disposed at the outer peripheral side of the tire supporting section 40 in its compressed diameter state, aligned facing each other, and with a cylindrical shaped tire inner face support ring 72 formed from thin sheet metal (for example from sheet steel of 0.5mm thickness) disposed at inside portions of the two tire halves 17A (note that to enable the interior to be seen one of the tire halves 17A is illustrated in a detached state in Fig. 2).

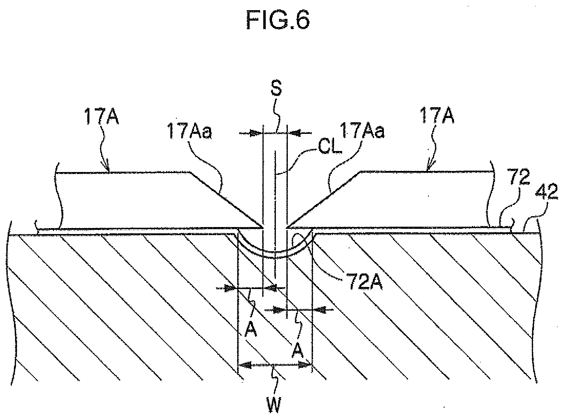

As shown in the cross-section of Fig. 6, the tire halves 17A of the present exemplary embodiment are formed with a taper shaped profile at the tire equatorial plane CL side. The inner peripheral faces of the tire halves 17A of the present exemplary embodiments are flat (parallel to the tire rotation axis) at the tire equatorial plane side, and an outside angled face 17Aa is formed at the outer peripheral face sloping towards the tire radius decreasing direction on progression towards edge portions on the tire equatorial plane CL side.

The edge portion of the one tire half 17A and the edge portion of the other tire half 17A may be placed so as to abut and be in contact with each other when the two tire halves 17A are placed so as to face each other. However, in the present exemplary embodiment a slight gap s is left open, as shown in Fig. 6, in order to supply the welding thermoplastic material 43 in a melted state to the inner peripheral side. The dimension of the gap s is, for example, 0.5mm to 2mm.
The outer radius of the tire inner face support ring 72 is set at substantially the same dimension as the inner radius of the outer peripheral portion of the tire halves 17A. The outer peripheral face of the tire inner face support ring 72 accordingly makes close contact with the inner peripheral face of the outer peripheral portion of the tire halves 17A.

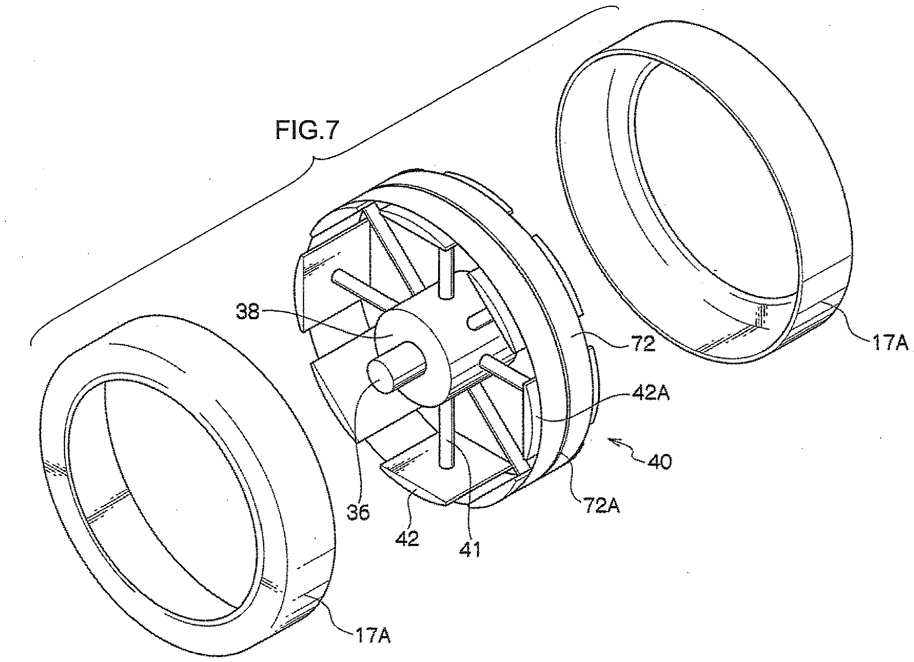

As shown in Fig. 6 and Fig. 7, a ring shaped groove 72A is formed to a width direction central portion of the outer peripheral face of the tire inner face support ring 72, extending continuously along the circumferential direction. The ring shaped groove 72A in the present exemplary embodiment is a substantially semi-circular shape in cross-sectional profile, however a shape other than a semi-circular shape may also be employed.
As shown in Fig. 6, the ring shaped groove 72A is preferably set with a width W such that the ring shaped groove 72A faces the respective inner peripheral faces of the tire halves 17A over a width A of 0.5 to 5mm from the edge portions of the tire halves 17A.

By placing the cylindrical shaped tire inner face support ring 72 inside the two tire halves 17A the inner face side of the portions of the tire halves 17A to be joined together are in close contact with the outer peripheral face of the tire inner face support ring 72. Recesses and projections of the joint portion (described later) caused by recesses and projections (of opposite shape to the above recesses and projections) occurring along the tire circumferential direction at the tire support portion outer periphery due to gaps (recess portions) between one of the tire support plates 42 and another of the tire support plates 42 of the tire supporting section 40, can be suppressed from occurring. Recesses and projections in the tire circumferential direction of the tire case 17 itself can accordingly be suppressed from occurring.

Due to the tire inner face support ring 72 being formed from a thin metal plate the tire inner face support ring 72 is readily insertable inside the tire halves 17A by bending deformation.
As shown in Fig. 7, the radius of the tire supporting section 40 is expanded, and the plural tire support plates 42 are made to contact the inner peripheral face of the tire inner face support ring 72, thereby retaining the tire inner face support ring 72 from the inside with the plural tire support plates 42 (in order to show the inside one of the tire halves 17A is illustrated in a removed state in Fig. 7). Note that when the inner peripheral face of the tire inner face support ring 72 has a projecting profile on the back side of the ring shaped groove 72A a groove may be formed in the outer peripheral face of each of the tire support plates 42 for relief of the projecting profile.
The tire inner face support ring 72 is formed in the present exemplary embodiment from a thin metal plate in order to perform bending deformation, however the tire inner face support ring 72 may also be configured by a hollow rigid body.
The edge portions on the tire equatorial plane side of the tire halves 17A can be aligned with each other with good precision around the whole perimeter due to the two tire halves 17A being aligned facing each other and supported in this manner.
(2) Next the extruder 44 is moved such that, as shown in Fig. 4, the abutting portions of the two tire halves 17A (on the tire equatorial plane CL of the tire case 17) are disposed below the fan 47, the hot air shielding roller 49, the resin extruding nozzle 46, the flatting roller 48 and the cooling air ejection nozzle 45.
(3) Next the hot air shielding roller 49 and the flatting roller 48 are lowered such that the hot air shielding roller 49 and the flatting roller 48 contact the two tire halves 17A so as to make contact with the outer periphery of the abutting portions of the tire halves 17A.
(4) Next hot air from the fan 47 is blown onto the outside angled faces 17Aa while the tire case 17 supported by the tire supporting section 40 is being rotated in the arrow A direction. The portions where the welding thermoplastic material 43 is to be applied are preheated in sequence, and the surface softened or melted (preheating process).
(5) Then the preheated portion is moved towards the rotation direction downstream side (the arrow A direction side), and the welding thermoplastic material 43 that has been extruded in a molten state from the resin extruding nozzle 46 is applied in sequence to the outside angled faces 17Aa configuring the outer peripheral face at both sides of the joint portion (joining process).
   Hot air is employed in the present exemplary embodiment for softening or melting the surface of the first thermoplastic material, however the present invention is not limited thereto. Configuration may be made in which a roller that has been heated by a heater is placed in contact to soften or melt, or infrared radiation such as from an IR heater (lamp) may be employed to soften or melt.
(6) Then the molten welding thermoplastic material 43 is pressed sequentially from the radial direction outside towards the radial direction inside by the flatting roller 48, so as to smooth the welding thermoplastic material 43 substantially flat and press a portion of the welding thermoplastic material 43 towards the tire radial direction inside through between the tire halves 17A, thereby filling the ring shaped groove 72A formed on the outer peripheral face of the tire inner face support ring 72.

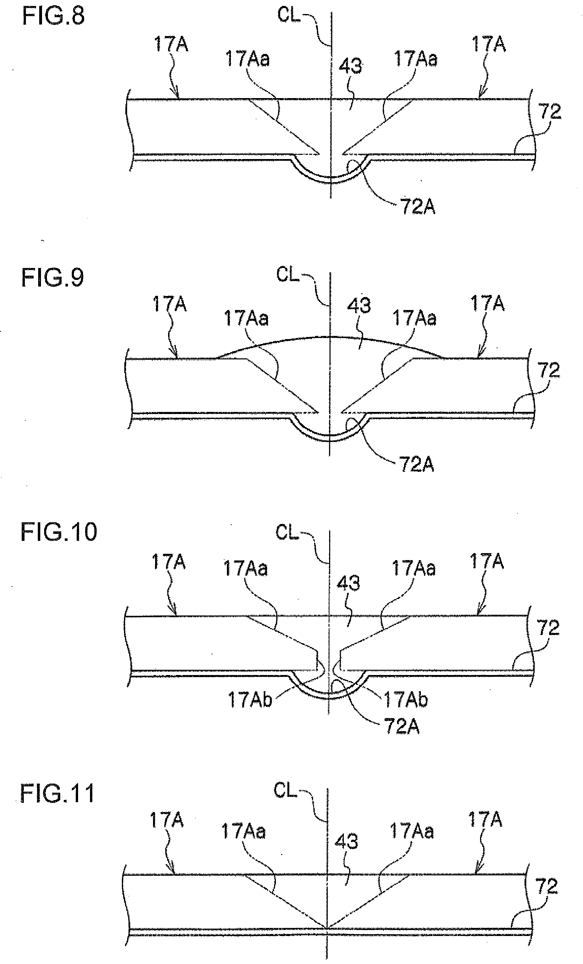

Namely, as shown in Fig. 8, a state results in which a substantially triangular shaped recess portion at the outer peripheral face side of the tire halves 17A, configured by the outside angled face 17Aa of one of the tire halves 17A and the outside angled face 17Aa of the other tire halves 17A, is filled with the welding thermoplastic material 43. Due to the molten welding thermoplastic material 43 filling the ring shaped groove 72A the molten welding thermoplastic material 43 is applied across a given width from the abutting portions on the inner peripheral face of the two tire halves 17A.

Accordingly in the present exemplary embodiment a high welding strength is obtained due to achieving a large welding surface area where the welding thermoplastic material 43 is applied to the outside angled faces 17A of the tire halves 17A and the inner peripheral face of the tire halves 17A, resulting in particularly good strength against bending deformation.

When the width of the welding thermoplastic material 43 applied to the inside faces of the tire halves 17A (corresponding to the width A of Fig. 6) is less than 0.5mm then insufficient effect is obtained from applying the welding thermoplastic material 43 to the inside faces of the tire halves 17A. However, when the width of the welding thermoplastic material 43 applied to the inside face of the tire halves 17A exceeds 5mm then the limit is reached to the welding strength raising effect from applying the welding thermoplastic material 43 to the inside face of the tire halves 17A, more welding thermoplastic material 43 than necessary is applied, leading to wasted welding thermoplastic material 43 and an increase in tire weight. The width of the welding thermoplastic material 43 applied to the inside faces of the tire halves 17A is accordingly preferably set in the range of 0.5mm to 5mm.

Prior to welding the joining locations on the tire halves 17A, namely the portions to be applied with the welding thermoplastic material 43, are preferably given a roughened surface by pre-buffing and cleaning with a cleaning agent such as alcohol. Corona treatment and/or ultraviolet radiation treatment may also be performed to the joining locations of the tire halves 17A prior to welding in order to facilitate application of the welding thermoplastic material 43.

The welding thermoplastic material 43 that has been applied to the tire halves 17A then progressively solidifies, so as to obtain the tire case 17 with the two tire halves 17A completely integrated by one of the tire halves 17A being welded to the other of the tire halves 17A with the welding thermoplastic material 43.

In the present exemplary embodiment the welding thermoplastic material 43 is rapidly cooled and solidified by placing the water-cooled flatting roller 48 in contact with the welding thermoplastic material 43 that has been applied to the tire halves 17A, and blowing with the cooling air emitted from the cooling air ejection nozzle 45. While it is possible to allow the welding thermoplastic material 43 to solidify through natural cooling, if there is a long duration until solidifying then sometimes the welding thermoplastic material 43 lifts up after flattening or deformation occurs. Hence in the present exemplary embodiment the welding thermoplastic material 43 is force cooled using the water-cooled flatting roller 48 and cooling air emitted from the cooling air ejection nozzle 45 in order to suppress the welding thermoplastic material 43 from lifting up after flattening or deformation from occurring. An increased number of water-cooled flatting rollers 48 may also be provided in place of the cooling air ejection nozzle 45.

In the present exemplary embodiment the hot air shielding roller 49 is disposed between the fan 47 and the resin extruding nozzle 46. Consequently, the hot air from the fan 47 does not hit the welding thermoplastic material 43 that has been extruded from the resin extruding nozzle 46 in a molten state. Thermal degradation of the welding thermoplastic material 43 can be prevented since the temperature of the molten welding thermoplastic material 43 is not raised higher than necessary. In the present exemplary embodiment the hot air shielding roller 49 is disposed such that hot air does not hit the welding thermoplastic material 43, however a hot air shielding member, such as a flap, may be disposed in place of the hot air shielding roller 49 such that hot air does not hit the welding thermoplastic material 43.

(7) The extruder 44 is then retracted and the cord feeder device 56 is disposed in the vicinity of the tire supporting section 40.

As shown in Fig. 5, the tire case 17 is rotated in the arrow A direction and the heated reinforcement cord 26 discharged from the discharge section 70 of the cord feeder device 56 is wound in a spiral shape on the outer peripheral face of the tire case 17 so as to form the crown reinforcement layer 28. Configuration may be made such that the cord feeder device 56 is moved in the tire case 17 axial direction while rotation the tire case 17 in order to wind the reinforcement cord 26 in a spiral shape on the outer peripheral face of the tire case 17.

By heating the reinforcement cord 26 to a higher temperature than the melting point of the first thermoplastic material (for example, heating the reinforcement cord 26 to a temperature from about 100 to 200°C) portions of the first thermoplastic material making contact with the reinforcement cord 26 are melted, and a portion or all of the reinforcement cord 26 can be embedded into the outer peripheral face of the tire case 17.
In the present exemplary embodiment the reinforcement cord 26 is pressed by the first roller 60 and the second roller 64 and embedded into the first thermoplastic material.

The embedded amount of the reinforcement cord 26 can be adjusted with the temperature of the reinforcement cord 26 and the tension applied to the reinforcement cord 26. The tension applied to the reinforcement cord 26 is adjustable by, for example, applying braking to the reel 58, or providing a member such as a tension adjustment roller in the conveying path of the reinforcement cord 26.

(8) The pre-vulcanized strip shaped tread rubber layer 30 is then wound one turn around the outer peripheral face of the tire case 17 and the tread rubber layer 30 is bonded to the outer peripheral face of the tire case 17 using, for example, a bonding agent or pre-vulcanized rubber (when pre-vulcanized rubber is employed then vulcanization is performed in a subsequent process to achieve bonding). A known pre-cured tread used in recycled tires can, for example, be employed for the tread rubber layer 30. This process is similar to the process of bonding a pre-cured tread to the outer peripheral face of a tire base in recycled tire manufacturing.

Bonding agents that may be employed include a triazine thiol bonding agent, a chlorinated rubber bonding agent, a phenol resin bonding agent, an isocyanate bonding agent, and a halogenated rubber bonding agent. Preferably a certain amount of drying is performed after coating the bonding agent in order to raise the bonding force. Accordingly coating the bonding agent is preferably performed in an atmosphere with a relative humidity of 70% or less.
Preferably the location where the tread rubber layer 30 is to be welded is roughened on the surface by pre-buffing and then cleaned with a cleaning agent such as alcohol. Prior to welding the joining locations of the tire halves 17Amay also be subjected to for example corona treatment or ultraviolet radiation treatment in order to facilitate application of the welding thermoplastic material 43.

(9) Bonding the seal layer 24 formed from pre-vulcanized rubber to the bead sections 12 of the tire case 17 such as with a bonding agent thus completes the tire 10. (10) Finally the diameter of the tire supporting section 40 is shrunk, the completed tire 10 is removed from the tire supporting section 40 and the tire inner face support ring 72 is removed from inside the tire by bending deformation.

### Operation

Explanation follows regarding operation of the tire 10 of the present exemplary embodiment. In the tire 10 of the present exemplary embodiment one of the tire halves 17A and the other of the tire halves 17A are welded together by the welding thermoplastic material 43, and degradation of the first thermoplastic material forming the tire halves 17A is suppressed since the tire halves 17A are not themselves melted for joining, and sufficient strength at the joint portion can be secured. The joining precision is also raised by the presence of the welding thermoplastic material 43 (the second thermoplastic material).

In the present exemplary embodiment at the joint portion of the tire halves 17A preheating is performed to the portion where the welding thermoplastic material 43 is to be applied, and a high joint strength is obtained since the welding thermoplastic material 43 is applied to both the inside and outside faces. The affinity of the welding thermoplastic material 43 to the first thermoplastic material is raised by applying the welding thermoplastic material 43 to the preheated first thermoplastic material, and a higher joint strength is obtained between the first thermoplastic material and the welding thermoplastic material 43 than in cases where the first thermoplastic material is not preheated.

Melting the first thermoplastic material on the surface of the tire halves 17A and applying the melted welding thermoplastic material 43 to the melted first thermoplastic material achieves a higher joint strength than when melted welding thermoplastic material 43 is applied to softened first thermoplastic material.

Applying the melted welding thermoplastic material 43 to the melted first thermoplastic material is preferable from the perspective of raising joint strength in that an intermixed layer is provided between the first thermoplastic material and the welding thermoplastic material 43 where there has been intermixing of the first thermoplastic material and the welding thermoplastic material 43.
Degradation of the first thermoplastic material is suppressed even when the first thermoplastic material on the surface of the tire halves 17A is melted by hot air since the welding thermoplastic material 43 is applied and then immediately cooled.

In the present exemplary embodiment only a single type of mold is required for forming the tire halves 17A since the tire case 17 is formed by aligning tire halves 17A of the same shape so as to face each other. Namely, a left-right symmetrical tire 10 can be manufactured with the one tire half 17A and the other tire half 17A, even without changing the shape of the mold.
In the tire 10 of the present exemplary embodiment vacuum molding, pressure molding, or injection molding can be employed for molding, since substantially all of the tire 10 apart from the tread section is formed from the first thermoplastic material. The manufacturing process can accordingly be greatly simplified compared to a rubber pneumatic tire.

In the tire 10 of the present exemplary embodiment, due to the bead cores 18 being embedded in the bead sections 12, a fitting strength of the tire 10 to the rim 20 similar to that of a conventional rubber pneumatic tire can be secured.
In the tire 10 of the present exemplary embodiment the proportion of the first thermoplastic material out of the tire structuring materials is high, and so good recyclability is achieved.

The crown reinforcement layer 28 is formed by spirally winding the reinforcement cord 26 of higher rigidity than that of the first thermoplastic material on the crown section 16, the crown section 16 is reinforced and characteristics such as the resistance to punctures, burst resistance, circumferential direction rigidity and creep preventing effect are raised.
The seal layer 24 formed from a rubber material with superior sealing properties to those of the first thermoplastic material is also provided to the portions that make contact with the rim 20, and in particular to portions that make contact with the rim flange 22, and so sealing ability similar to that of a conventional rubber pneumatic tire is obtained.

The tire 10 of the present exemplary embodiment is equipped with the tread 30 formed from a rubber of similar type to rubber employed in a conventional rubber pneumatic tire tread, and so similar characteristics are obtained to a conventional rubber pneumatic tire, such as abrasion resistance and grip.

The tire case 17 of the present exemplary embodiment is formed by joining together two of the tire halves 17A. However in cases in which the tire case 17 is configured from three members the tire case 17 may be split into three members of a first side section 14, a second side section 14 and the crown section 16. For joining in such cases the welding thermoplastic material 43 can also be employed for welding. In such cases the joint portions of the side sections 14 and the crown section 16 are preferably disposed at locations that do not make road contact.

### Other Exemplary Embodiments

According to the invention, in the above exemplary embodiments the welding thermoplastic material 43 is only applied to the outside angled faces 17Aa when applying the welding thermoplastic material 43 to the outer peripheral face of the tire halves 17A. The configuration shown in Fig. 9, in which the welding thermoplastic material 43 is also applied further to the outside than the outside angled faces 17Aa , is not according to the invention.

In the above exemplary embodiments the edge portions on the tire equatorial plane side of the tire halves 17A are shaped with acute angles, however configuration may be made in which, as shown in Fig. 10, an edge face 17Ab is formed at the leading edge portion parallel to the tire equatorial plane CL.

The sequence of manufacturing process given in the above exemplary embodiments is merely an example and appropriate changes may be made to the sequence of each of the processes.

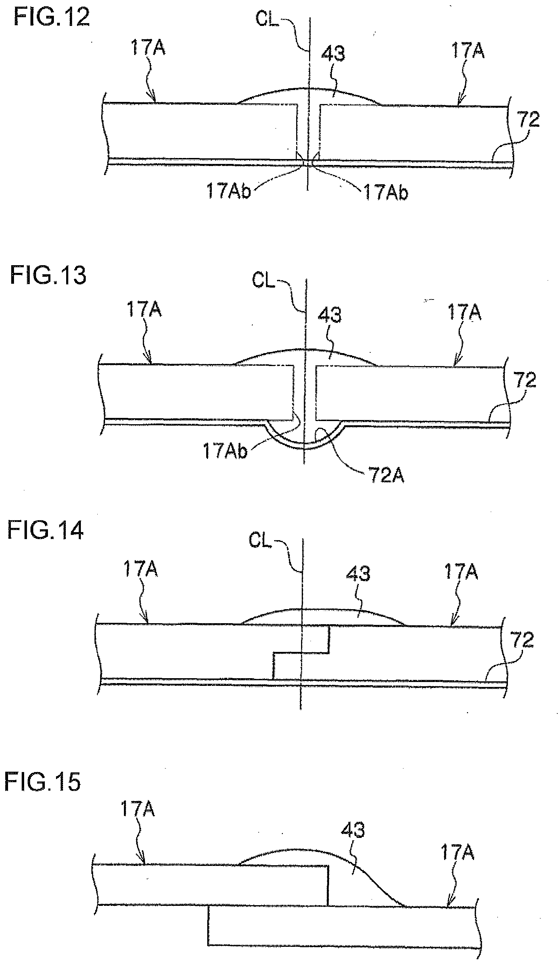

In the above exemplary embodiments a gap is formed between the edge portions of the tire halves 17A. The example shown in Fig. 11, in which the edge portions of the tire halves 17A are placed in contact with each other, and the welding thermoplastic material 43 is not applied to the inner peripheral face side, is not according to the invention. In the above exemplary embodiments the outside angled faces 17Aa are formed on the outer peripheral face at the edge portion side of the tire halves 17A. The configuration shown in Fig. 12 in which the welding thermoplastic material 43 is filled into a gap between the edge face 17Ab and the edge face 17Ab parallel to the tire equatorial plane CL , is not according to the invention. The configuration shown in Fig. 13, in which the welding thermoplastic material 43 is filled into a gap between the edge face 17Ab and the edge face 17Ab joining together the edge faces 17Ab, and the welding thermoplastic material 43 is also applied to the inside and outside faces of the tire halves 17A , is not according to the invention.

In the above exemplary embodiments there is left-right symmetry of the edge portion profile of the one tire half 17A to the edge portion profile of the other tire half 17A, with the tire equatorial plane CL disposed therebetween. An asymmetrical configuration may be employed. However, the configurations, illustrated in Fig. 14 and Fig. 15 are not according to the invention.
In the examples of Fig. 10 too it is preferable to preheat the portion where the welding thermoplastic material 43 is to be applied before applying the welding thermoplastic material 43.

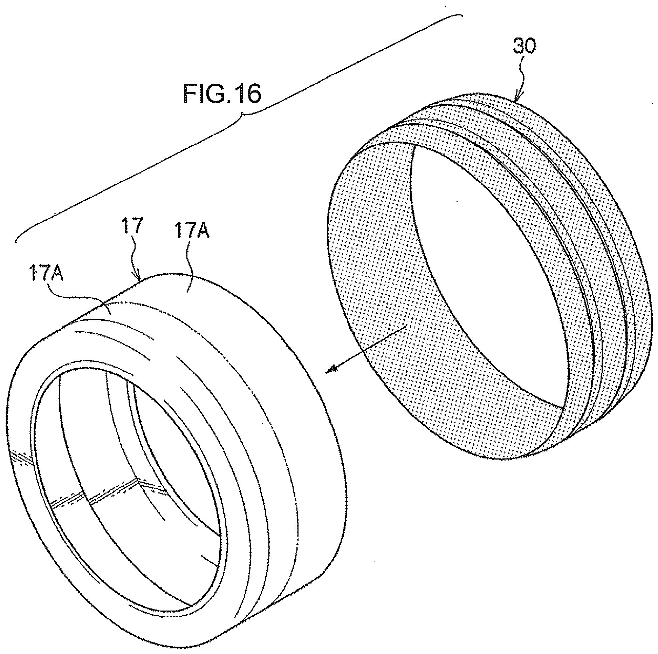

The edge portions of the tire halves 17A are not limited to the profiles explained in the above exemplary embodiment, and various modifications are possible.
In the above exemplary embodiments the pre-vulcanized strip shaped tread rubber layer 30 is wrapped one turn around the outer peripheral face of the tire case 17, however, as shown in Fig. 16, a pre-vulcanized tread rubber layer 30 that has been pre-formed into a circular ring shape may be inserted in from the axial direction of the tire case 17, and the tire case 17 and the circular ring shaped pre-vulcanized tread rubber layer 30 then bonded together using for example a bonding agent.

In the above exemplary embodiments the material of the reinforcement cord 26 is steel, however configuration may be made with organic fibers or the like. When organic fiber reinforcement cord 26 is employed the reinforcement cord 26 is not itself heated, and the reinforcement cord 26 can be wound while heating and melting the outer surface of the outer peripheral section of the tire case 17. The outer surface is preferably heated from the perspective of joining.
The joint faces are also preferably heated in such cases prior to joining (by blowing with hot air or rolling with a heated roller).

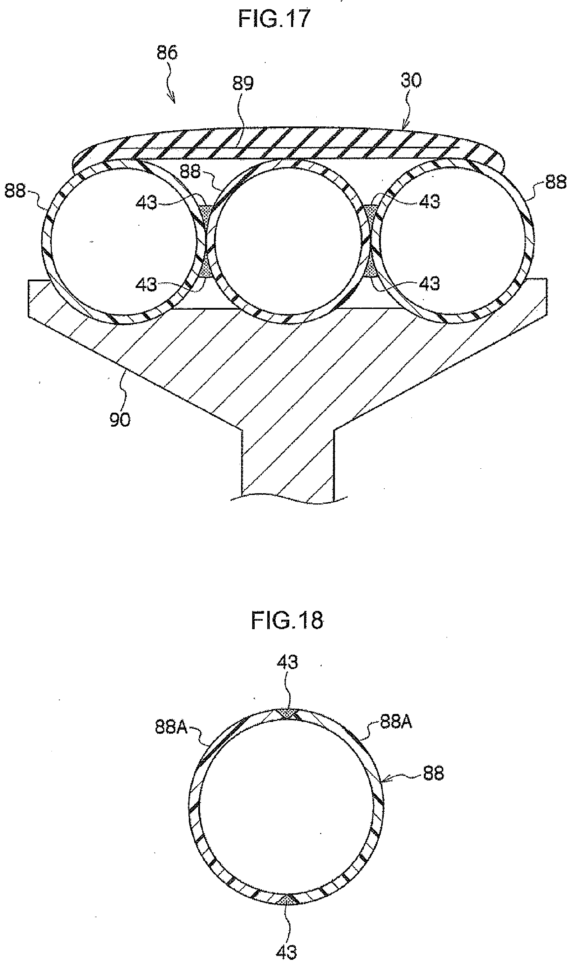

The tire 10 of the above exemplary embodiments is a tubeless type of tire. However, as shown in Fig. 17, a tire 86 of the present exemplary embodiment has three circular ring shaped hollow tubes 88 formed from a first thermoplastic material disposed along the tire width direction. The tubes 88 are mutually joined together with a welding thermoplastic material 43, with a tread rubber layer 30 embedded with a belt 89 welded to the outer peripheral section of the three tubes. The tubes 88 are mounted so as to engage with recess portions on a rim 90. There is no bead core provided to the tire 86.
The tubes 88 may also, as shown in Fig. 18, be formed from semi-circular cross-section shaped tube halves 88A formed by aligning so as to face each other and welding together with the welding thermoplastic material 43.

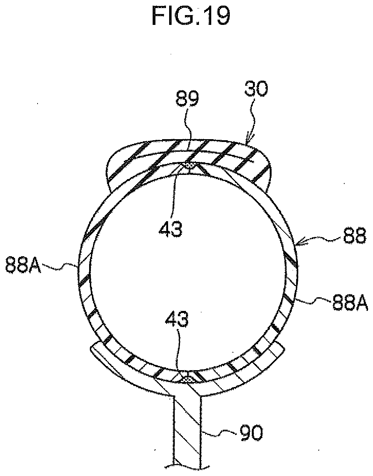

As shown in Fig. 19, a tubeless type of configuration may be employed for the tire 10 employing a single tube 88 (configured form two tube halves 88A), with a tread rubber layer 30 welded to an outer peripheral section of the tube 88.
The welding thermoplastic material 43 can be supplied to the joining locations after the locations have been pre-heated in advance in a similar manner to the above exemplary embodiment both when the tube halves 88A are welded together and when the tubes 88 are welded together,.

It is easy from the manufacturing perspective to form the crown reinforcement layer 28 by winding the reinforcement cord 26 in a spiral shape. However cords that are not continuous in the tire width direction may also be employed.

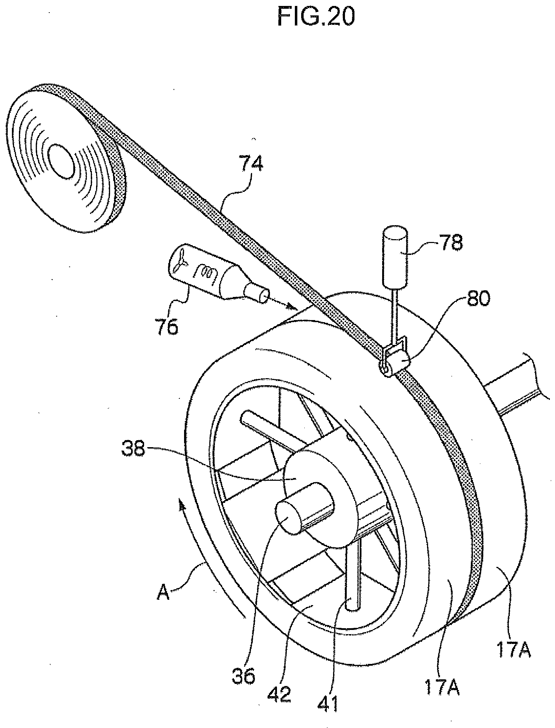

In the above exemplary embodiment the welding thermoplastic material 43 is supplied to the joint portion when completely melted, and the one tire half 17A is welded to the other tire half 17A. However, as shown in Fig. 20, configuration may be made in which the one tire half 17A is joined to the other tire half 17A by a strip shaped welding sheet 74 formed from a thermoplastic resin being welded to both the one tire half 17A and the other tire half 17A, namely by welding the welding sheet 74 to an outer peripheral portion straddling the joint faces of the one tire half 17A and the other tire half 17A.

In the method employed for joining in the present exemplary embodiment hot air generated by a heating device 76 configured from a heater and a fan is directed onto the bottom face of the strip shaped welding sheet 74 (the side facing towards the tire halves 17A) so as to melt the bottom face of the welding sheet 74, and the welding sheet 74 is wrapped around while rotating the tire case 17 in the arrow A direction. The welding sheet 74 is thereby welded so as to straddle the one tire half 17A and the other tire half 17A. The width of the welding sheet 74 is preferably 5mm or greater.

The welding sheet 74 can be reliably welded by pressing the welding sheet 74 against the tire halves 17A with a roller 80 biased with a cylinder 78. Instead of heating with hot air heating may also be performed using irradiation with infrared radiation. If the thermoplastic material can be joined together by softening then it is not always essential to melt the thermoplastic material.

Hot air may also be blown against the bottom face of the welding sheet 74 and the locations on the outer peripheral section of the tire halves 17A destined to be welded together with the welding sheet 74, such that the welding sheet 74 is welded to the tire halves 17A after the respective surfaces have been melted.

The thermoplastic resin employed for the welding sheet 74 is preferably of a similar type to the thermoplastic material forming the tire halves 17A, however a different type of thermoplastic material to that of the thermoplastic material forming the tire halves 17A may be employed as long as no problems with welding arise.

Explanation of the Reference Numerals
- 10: tire
- 12: bead section
- 14: side section (tier side section)
- 16: crown section (outer peripheral section)
- 17: tire case
- 17A: tire half (first thermoplastic material, first tire structuring member)
- 17Aa: outside angled face (joint face, location to be joined)
- 18: bead core
- 24: seal layer (seal section)
- 26: reinforcement cord (cord)
- 28: crown reinforcement layer (reinforcement layer)
- 30: tread rubber layer (second tire structuring member)
- 43: welding thermoplastic material (second thermoplastic material)
- 46: nozzle
- 46: resin extruding nozzle
- 47: fan
- 48: roller
- 49: hot air shielding roller
- 72: tire inner face support ring (inside support member)
- 72A: Ring shaped groove
- 86: tire
- 88: tube
- 88A: tube half

## Claims

1. A tire (10) configured from a plurality of tire structuring members (17A) formed from a first thermoplastic material, wherein the tire structuring members (17A) are joined together by joining with a second thermoplastic material, and an intermixed layer is provided between the first thermoplastic material and the second thermoplastic material where there has been intermixing of the first thermoplastic material and the second thermoplastic material,
wherein a reinforcement layer formed by spirally winding a cord (26) of higher rigidity than the first thermoplastic material is provided at an outer peripheral section,
wherein for tire structuring members (17A) that are adjacent, a joint face (17Aa) of a first of the adjacent tire structuring members (17A) and a joint face (17Aa) of a second adjacent tire structuring member (17A) are angled towards the tire radius decreasing direction on progression towards edge portions of the tire structuring members (17A),
wherein the second thermoplastic material is applied to the inside and outside faces of the first adjacent tire structuring member (17A) and the inside and outside faces of the second adjacent tire structuring member (17A);
**characterized in that**,
at the outer peripheral face of the tire structuring members (17A), the second thermoplastic material is applied only to the outside angled faces (17Aa).

2. The tire (10) of claim 1 comprising a bead section (12) for making contact with a bead seat (21) of a rim (20) provided at the tire radial direction inside and a rim flange (22), wherein a bead core (18) is embedded in a ring shape in the bead section (12).

3. The tire (10) of claim 1 or claim 2 wherein the tire (10) is formed from the first thermoplastic material at least from the bead section (12) to an outer peripheral section.

4. The tire (10) of any one of claim 1 to claim 3 wherein the first adjacent tire structuring member (17A) and the second adjacent tire structuring member (17A) are placed with a gap (S) between each other, and the second thermoplastic material is interposed into the gap (S).

5. The tire (10) of any one of claim 1 to claim 4 wherein the first adjacent tire structuring member (17A) and the second adjacent tire structuring member (17A) are joined together at a tire width direction central portion.

6. The tire (10) of any one of claim 1 to claim 5 wherein the plurality of tire structuring members (17A) comprises a pair of first tire structuring members (17A) for configuring tire side sections at the two sides, and a second tire structuring member (17A) disposed between the pair of first tire structuring members (17A) and configuring an outer peripheral section for facing towards a road surface.

7. The tire (10) of any one of claim 1 to claim 6 wherein a seal section (24) formed from a rubber with superior sealing properties to the first thermoplastic material is provided to a portion of the tire (10) for making contact with a rim (2) so that air inside the tire does not leak out.

8. The tire (10) of any one of claim 1 to claim 7 wherein a tread rubber layer (30) formed from a rubber with superior abrasion resistance to that of the first thermoplastic material is provided at a portion of the tire (10) for making contact with a road surface.

9. A tire manufacturing method for manufacturing a tire (10) configured by joining together a plurality of tire structuring members (17A) formed from a first thermoplastic material, the tire manufacturing method comprising:
a joining process for joining together a first and a second of two of the tire structuring members (17A) by applying a second thermoplastic material that has been melted to both the first tire structuring member (17A) and the second tire structuring member (17A) to be joined together and cooling and solidifying the second thermoplastic material that has been applied to the first tire structuring member (17A) and the second tire structuring member (17A)
wherein a reinforcement layer is formed by spirally winding a cord (26) of higher rigidity than the first thermoplastic material at an outer peripheral section,
wherein an outside angled face (17Aa) is formed to an outer peripheral face of the tire structuring member (17A) so as to be angled towards the tire radius decreasing direction on progression towards the tire structuring member (17A) edge portion,
wherein the second thermoplastic material is applied to the inside and outside faces of the first adjacent tire structuring member (17A) and the inside and outside faces of the second adjacent tire structuring member (17A)
**characterized in that**
at the outer peripheral face of the tire structuring members (17A), the second thermoplastic material is applied only to the outside angled faces (17Aa).

10. A tire manufacturing method of claim 9, the tire manufacturing method further comprising:
a preheating process for preheating locations to be joined on the first and second tire structuring members (17A); wherein the second thermoplastic material is applied to the preheated locations to be joined.

11. The tire manufacturing method of claim 10 wherein:
in the preheating process the locations to be joined are preheated in sequence; and
in the joining process the melted second thermoplastic material is supplied in sequence to along the preheated locations to be joined, and the second thermoplastic material applied to the tire structuring members (17A) is pressed in sequence by a roller (48).

12. The tire manufacturing method of any one of claim 9 to claim 11 wherein in the joining process:
a ring shaped groove (72A) is formed along the outer peripheral face of the locations to be joined;
the inner peripheral faces of the first tire structuring member (17A) and the second tire structuring member (17A) are supported by an inside support member (72); and
the second thermoplastic material that has been applied in a molten state to the outer peripheral face of the tire structuring members (17A) is pressed with a roller (48) such that a portion of the molten state second thermoplastic material is inserted into the ring shaped groove (72A) through between the first tire structuring member (17A) and the second tire structuring member (17A) and applied to the respective inner peripheral faces of the first tire structuring member (17A) and the second tire structuring member (17A).

13. The tire manufacturing method of any one of claim 9 to claim 12 further comprising a forced cooling process in which at least the second thermoplastic material applied to the tire structuring members (17A) is force cooled.

## Patentansprüche

1. Reifen (10), der aus mehreren Reifenstrukturierungselementen (17A) konfiguriert ist, die aus einem ersten thermoplastischen Werkstoff geformt sind, wobei die Reifenstrukturierungselemente (17A) durch Verbinden mit einem zweiten thermoplastischen Werkstoff miteinander verbunden sind und eine vermischte Lage zwischen dem ersten thermoplastischen Werkstoff und dem zweiten thermoplastischen Werkstoff bereitgestellt wird, wo es eine Vermischung des ersten thermoplastischen Werkstoffs und des zweiten thermoplastischen Werkstoffs gegeben hat,
wobei eine Verstärkungslage, die durch spiralförmiges Wickeln eines Kords (26) mit höherer Steifigkeit als der erste thermoplastische Werkstoff geformt ist, an einer Außenumfangssektion bereitgestellt wird,
wobei für Reifenstrukturierungselemente (17A) die benachbart sind, eine Anschlussfläche (17Aa) eines ersten der benachbarten Reifenstrukturierungselemente (17A) und eine Anschlussfläche (17Aa) eines zweiten benachbarten Reifenstrukturierungselements (17A) beim Fortschreiten zu Kantenabschnitten der Reifenstrukturierungselemente (17A) hin zu der Reifenradius-Verminderungsrichtung hin abgewinkelt sind,
wobei der zweite thermoplastische Werkstoff auf die Innen- und Außenflächen des ersten benachbarten Reifenstrukturierungselements (17A) und die Innen- und Außenflächen des zweiten benachbarten Reifenstrukturierungselements (17A) aufgebracht ist,
**dadurch gekennzeichnet, dass**,
an der Außenumfangsfläche des ersten Reifenstrukturierungselements (17A), der zweite thermoplastische Werkstoff nur auf die äußeren abgewinkelten Flächen (17Aa) aufgebracht ist.

2. Reifen (10) nach Anspruch 1, der eine Wulstsektion (12) zum Herstellen einer Berührung mit einem Wulstsitz (21) einer Felge (20), der an der in Reifenradialrichtung inneren Seite bereitgestellt wird, und einem Felgenflansch (22) umfasst, wobei ein Wulstkern (18) in einer Ringform in der Wulstsektion (12) eingebettet ist.

3. Reifen (10) nach Anspruch 1 oder Anspruch 2, wobei der Reifen (10) wenigstens von der Wulstsektion (12) bis zu einer Außenumfangssektion aus dem ersten thermoplastischen Werkstoff geformt ist.

4. Reifen (10) nach einem der Ansprüche 1 bis 3, wobei das erste benachbarte Reifenstrukturierungselement (17A) und das zweite benachbarte Reifenstrukturierungselement (17A) mit einem Spalt (S) zwischen sich angeordnet sind und der zweite thermoplastische Werkstoff in den Spalt (S) eingefügt ist.

5. Reifen (10) nach einem der Ansprüche 1 bis 4, wobei das erste benachbarte Reifenstrukturierungselement (17A) und das zweite benachbarte Reifenstrukturierungselement (17A) an einem in Reifenbreitenrichtung mittigen Abschnitt aneinandergefügt sind.

6. Reifen (10) nach einem der Ansprüche 1 bis 5, wobei die mehreren Reifenstrukturierungselemente (17A) ein Paar von ersten Reifenstrukturierungselementen (17A) zum Konfigurieren von Reifenseitensektionen an den zwei Seiten und ein zweites Reifenstrukturierungselement (17A), das zwischen dem Paar von ersten Reifenstrukturierungselementen (17A) angeordnet ist und eine Außenumfangssektion zum Zeigen zu einer Straßenfläche hin konfiguriert, umfassen.

7. Reifen (10) nach einem der Ansprüche 1 bis 6, wobei eine Dichtungssektion (24), die aus Gummi mit gegenüber dem ersten thermoplastischen Werkstoff überlegenen Abdichtungseigenschaften geformt ist, an einem Abschnitt des Reifens (10) zum Herstellen einer Berührung mit einer Felge (2) bereitgestellt wird, so dass Luft innerhalb des Reifens nicht austritt.

8. Reifen (10) nach einem der Ansprüche 1 bis 7, wobei eine Laufflächen-Gummilage (30), die aus einem Gummi mit gegenüber derjenigen des thermoplastischen Werkstoffs überlegener Abriebbeständigkeit geformt ist, an einem Abschnitt des Reifens (10) zum Herstellen einer Berührung mit einer Straßenoberfläche bereitgestellt wird.

9. Reifenherstellungsverfahren zum Herstellen eines Reifens (10), der aus mehreren Reifenstrukturierungselementen (17A) konfiguriert ist, wobei das Reifenherstellungsverfahren Folgendes umfasst:
einen Verbindungsvorgang zum Verbinden eines ersten und eines zweiten von zwei der Reifenstrukturierungselemente (17A) miteinander durch Aufbringen eines zweiten thermoplastischen Werkstoffs, der geschmolzen worden ist, auf sowohl das erste Reifenstrukturierungselement (17A) als auch das zweite Reifenstrukturierungselement (17A), damit sie miteinander verbunden werden, und Abkühlen und Erhärten des zweiten thermoplastischen Werkstoffs, der auf das erste Reifenstrukturierungselement (17A) und das zweite Reifenstrukturierungselement (17A) aufgebracht worden ist,
wobei eine Verstärkungslage durch spiralförmiges Wickeln eines Kords (26) mit höherer Steifigkeit als der erste thermoplastische Werkstoff geformt ist, an einer Außenumfangssektion geformt wird,
wobei eine außen abgewinkelte Fläche (17Aa) so an einer Außenumfangsfläche des Reifenstrukturierungselements (17A) geformt wird, dass sie beim Fortschreiten zum Kantenabschnitt des Reifenstrukturierungselements (17A) hin zu der Reifenradius-Verminderungsrichtung hin abgewinkelt wird,
wobei der zweite thermoplastische Werkstoff auf die Innen- und Außenflächen des ersten benachbarten Reifenstrukturierungselements (17A) und die Innen- und Außenflächen des zweiten benachbarten Reifenstrukturierungselements (17A) aufgebracht wird,
**dadurch gekennzeichnet, dass**
an der Außenumfangsfläche des ersten Reifenstrukturierungselements (17A), der zweite thermoplastische Werkstoff nur auf die äußeren abgewinkelten Flächen (17Aa) aufgebracht wird.

10. Reifenherstellungsverfahren nach Anspruch 9, wobei das Reifenherstellungsverfahren ferner Folgendes umfasst:
einen Vorheizvorgang zum Vorheizen von zu verbindenden Positionen an dem ersten und dem zweiten Reifenstrukturierungselement (17A), wobei der zweite thermoplastische Werkstoff auf die vorgeheizten zu verbindenden Positionen aufgebracht wird.

11. Reifenherstellungsverfahren nach Anspruch 10, wobei:
in dem Vorheizvorgang die zu verbindenden Positionen nacheinander vorgeheizt werden und
in dem Verbindungsvorgang der geschmolzene zweite thermoplastische Werkstoff nacheinander entlang der zu verbindenden Positionen aufgebracht wird und der auf die Reifenstrukturierungselemente (17A) aufgebrachte zweite thermoplastische Werkstoff nacheinander durch eine Walze (48) gepresst wird.

12. Reifenherstellungsverfahren nach einem der Ansprüche 9 bis 11, wobei in dem Verbindungsvorgang:
eine ringförmige Rille (72A) entlang der Außenumfangsfläche der zu verbindenden Positionen geformt wird,
die Innenumfangsflächen des ersten Reifenstrukturierungselements (17A) und des zweiten Reifenstrukturierungselements (17A) durch ein inneres Stützelement (72) getragen werden und
der zweite thermoplastische Werkstoff, der in einem geschmolzenen Zustand auf die Außenumfangsfläche der Reifenstrukturierungselemente (17A) aufgebracht worden ist, derart mit einer Walze (48) gepresst wird, dass ein Teil des zweiten thermoplastischen Werkstoffs in geschmolzenem Zustand in die ringförmige Rille (72A) zwischen dem ersten Reifenstrukturierungselement (17A) und dem zweiten Reifenstrukturierungselement (17A) hindurch eingeführt und auf die jeweiligen Innenumfangsflächen des ersten Reifenstrukturierungselements (17A) und des zweiten Reifenstrukturierungselements (17A) aufgebracht wird.

13. Reifenherstellungsverfahren nach einem der Ansprüche 9 bis 12, das ferner einen Zwangskühlungsvorgang umfasst, in dem wenigstens der auf die Reifenstrukturierungselemente (17A) aufgebrachte zweite thermoplastische Werkstoff zwangsgekühlt wird.

## Revendications

1. Pneumatique (10) configuré à partir d'une pluralité d'éléments de structuration de pneumatique (17A) qui sont formés à partir d'un premier matériau thermoplastique, dans lequel les éléments de structuration de pneumatique (17A) sont joints ensemble par jonction avec un second matériau thermoplastique, et une couche interdiffusée est prévue entre le premier matériau thermoplastique et le second matériau thermoplastique, couche interdiffusée au niveau de laquelle il y a eu une interdiffusion du premier matériau thermoplastique et du second matériau thermoplastique ; dans lequel :
une couche de renforcement qui est formée en enroulant en spirale un câble (26) d'une rigidité plus élevée que celle du premier matériau thermoplastique est prévue au niveau d'une section périphérique externe ; dans lequel :
pour des éléments de structuration de pneumatique (17A) qui sont adjacents, une face de jonction (17Aa) d'un premier des éléments de structuration de pneumatique adjacents (17A) et une face de jonction (17Aa) d'un second élément de structuration de pneumatique adjacent (17A) sont angulées en direction de la direction de diminution de rayon de pneumatique selon une progression en direction de parties de bord des éléments de structuration de pneumatique (17A) ; dans lequel :
le second matériau thermoplastique est appliqué sur les faces intérieure et extérieure du premier élément de structuration de pneumatique adjacent (17A) et sur les faces intérieure et extérieure du second élément de structuration de pneumatique adjacent (17A) ;
**caractérisé en ce que** :
au niveau de la face périphérique externe des éléments de structuration de pneumatique (17A), le second matériau thermoplastique est appliqué seulement sur les faces angulés extérieures (17Aa).

2. Pneumatique (10) selon la revendication 1, comprenant une section de talon (12) qui est destinée à réaliser un contact avec un siège de talon (21) d'une jante (20) qui est prévu au niveau de l'intérieur suivant la direction radiale de pneumatique et avec un rebord de jante (22), dans lequel un corps de talon (18) est intégré selon une forme de bague dans la section de talon (12).

3. Pneumatique (10) selon la revendication 1 ou la revendication 2, dans lequel le pneumatique (10) est formé à partir du premier matériau thermoplastique au moins depuis la section de talon (12) jusqu'à une section périphérique externe.

4. Pneumatique (10) selon l'une quelconque des revendications 1 à 3, dans lequel le premier élément de structuration de pneumatique adjacent (17A) et le second élément de structuration de pneumatique adjacent (17A) sont placés de telle sorte qu'un espace (S) soit présent entre eux, et le second matériau thermoplastique est interposé à l'intérieur de l'espace (S).

5. Pneumatique (10) selon l'une quelconque des revendications 1 à 4, dans lequel le premier élément de structuration de pneumatique adjacent (17A) et le second élément de structuration de pneumatique adjacent (17A) sont joints ensemble au niveau d'une partie centrale suivant la direction de largeur de pneumatique.

6. Pneumatique (10) selon l'une quelconque des revendications 1 à 5, dans lequel les éléments de structuration de pneumatique de la pluralité d'éléments de structuration de pneumatique (17A) comprennent une paire de premiers éléments de structuration de pneumatique (17A) qui sont destinés à configurer des sections latérales de pneumatique au niveau des deux côtés, et un second élément de structuration de pneumatique (17A) qui est disposé entre la paire de premiers éléments de structuration de pneumatique (17A) et qui configure une section périphérique externe qui est destinée à être dirigée en direction d'une surface de route.

7. Pneumatique (10) selon l'une quelconque des revendications 1 à 6, dans lequel une section d'étanchéité (24) qui est formée à partir d'un caoutchouc qui présente des propriétés d'étanchéité qui sont supérieures à celles du premier matériau thermoplastique est prévue sur une partie du pneumatique (10) qui est destinée à réaliser un contact avec une jante (2) de telle sorte que de l'air à l'intérieur du pneumatique ne fuie pas.

8. Pneumatique (10) selon l'une quelconque des revendications 1 à 7, dans lequel une couche de caoutchouc de bande de roulement (30) qui est formée à partir d'un caoutchouc qui présente une résistance à l'abrasion qui est supérieure à celle du premier matériau thermoplastique est prévue au niveau d'une partie du pneumatique (10) qui est destinée à réaliser un contact avec une surface de route.

9. Procédé de fabrication de pneumatique pour fabriquer un pneumatique (10) qui est configuré en joignant ensemble une pluralité d'éléments de structuration de pneumatique (17A) qui sont formés à partir d'un premier matériau thermoplastique, le procédé de fabrication de pneumatique comprenant :
un processus de jonction pour joindre ensemble un premier élément de structuration de pneumatique et un second élément de structuration de pneumatique de deux des éléments de structuration de pneumatique (17A) en appliquant un second matériau thermoplastique qui a été fondu sur à la fois le premier élément de structuration de pneumatique (17A) et le second élément de structuration de pneumatique (17A) qui sont destinés à être joints ensemble et en refroidissant et en solidifiant le second matériau thermoplastique qui a été appliqué sur le premier élément de structuration de pneumatique (17A) et sur le second élément de structuration de pneumatique (17A) ; dans lequel :
une couche de renforcement est formée en enroulant en spirale un câble (26) d'une rigidité plus élevée que celle du premier matériau thermoplastique au niveau d'une section périphérique externe ; dans lequel :
une face angulée externe (17Aa) est formée sur une face périphérique externe de l'élément de structuration de pneumatique (17A) de manière à ce qu'elle soit angulée en direction de la direction de diminution de rayon de pneumatique selon une progression en direction de la partie de bord de l'élément de structuration de pneumatique (17A) ; dans lequel :
le second matériau thermoplastique est appliqué sur les faces intérieure et extérieure du premier élément de structuration de pneumatique adjacent (17A) et sur les faces intérieure et extérieure du second élément de structuration de pneumatique adjacent (17A) ;
**caractérisé en ce que** :
au niveau de la face périphérique externe des éléments de structuration de pneumatique (17A), le second matériau thermoplastique est appliqué seulement sur les faces angulés extérieures (17Aa).

10. Procédé de fabrication de pneumatique selon la revendication 9, le procédé de fabrication de pneumatique comprenant en outre :
un processus de préchauffage pour préchauffer des emplacements qui sont destinés à être joints sur les premier et second éléments de structuration de pneumatique (17A) ; dans lequel le second matériau thermoplastique est appliqué sur les emplacements préchauffés qui sont destinés à être joints.

11. Procédé de fabrication de pneumatique selon la revendication 10, dans lequel :
au niveau du processus de préchauffage, les emplacements qui sont destinés à être joints sont préchauffés en séquence ; et
au niveau du processus de jonction, le second matériau thermoplastique fondu est alimenté en séquence le long des emplacements préchauffés qui sont destinés à être joints, et le second matériau thermoplastique qui est appliqué sur les éléments de structuration de pneumatique (17A) est pressé en séquence au moyen d'un rouleau (48).

12. Procédé de fabrication de pneumatique selon l'une quelconque des revendications 9 à 11, dans lequel, au niveau du processus de jonction :
une rainure en forme de bague (72A) est formée le long de la face périphérique externe des emplacements qui sont destinés à être joints ;
les faces périphériques internes du premier élément de structuration de pneumatique (17A) et du second élément de structuration de pneumatique (17A) sont supportées par un élément de support intérieur (72) ; et
le second matériau thermoplastique qui a été appliqué dans un état fondu sur la face périphérique externe des éléments de structuration de pneumatique (17A) est pressé au moyen d'un rouleau (48) de telle sorte qu'une partie du second matériau thermoplastique dans l'état fondu soit insérée à l'intérieur de la rainure en forme de bague (72A) au travers de l'espace entre le premier élément de structuration de pneumatique (17A) et le second élément de structuration de pneumatique (17A) et soit appliquée sur les faces périphériques internes respectives du premier élément de structuration de pneumatique (17A) et du second élément de structuration de pneumatique (17A).

13. Procédé de fabrication de pneumatique selon l'une quelconque des revendications 9 à 12, comprenant en outre un processus de refroidissements forcé selon lequel au moins le second matériau thermoplastique qui est appliqué sur les éléments de structuration de pneumatique (17A) est refroidi de manière forcée.
